(19) Europäisches Patentamt

European Patent Office

Office européen des brevets

(11) **EP 1 650 503 A1**

(12) **EUROPEAN PATENT APPLICATION**

(43) Date of publication:
   **26.04.2006 Bulletin 2006/17**

(51) Int Cl.:
   **F23R 3/00** (2006.01)

(21) Application number: **04025338.7**

(22) Date of filing: **25.10.2004**

(84) Designated Contracting States:
   **AT BE BG CH CY CZ DE DK EE ES FI FR GB GR
   HU IE IT LI LU MC NL PL PT RO SE SI SK TR**
   Designated Extension States:
   **AL HR LT LV MK**

(71) Applicant: **SIEMENS AKTIENGESELLSCHAFT
   80333 München (DE)**

(72) Inventors:
   • **Dahlke, Stefan
     51515 Bechen (DE)**
   • **Gruschka, Uwe
     41564 Kaarst (DE)**
   • **Heilos, Andreas
     45468 Mülheim (DE)**
   • **Liebe, Roland, Dr.
     40789 Monheim (DE)**

(54) **Method for cooling a heat shield element and a heat shield element**

(57)   The invention relates to a method for cooling a heat shield element (13), comprising a wall (15) with an inner side (151) and an outer side (153), which can be exposed to a hot fluid, and wherein a coolant (K) is introduced into an impingement region (17) of that heat shield element (13) and an impingement flow (19) of said coolant (K) is directed on a surface area (23) of that inner side (151) through a plurality of impingement holes (21), effecting an impingement pressure drop ($\Delta P_I$). In the method discharge flow (25) is metered through a number of discharge holes (27) through said wall (15) from the inner side (151) to the outer side (153) of the wall (15), effecting a discharge pressure drop ($\Delta P_D$) in series with the impingement pressure drop ($\Delta P_I$). The impingement pressure drop ($\Delta P_I$) and the discharge pressure drop ($\Delta P_D$) are matched to one another so that a required coolant flow (K) is generated which yields a predetermined heat-transfer coefficient of the wall ($\alpha$).

FIG 2

EP 1 650 503 A1

## Description

The present invention relates to a method for cooling a heat shield element comprising a wall with a cold inner side and a hot outer side, wherein a coolant is introduced into an impingement region of that heat shield element and an impingement flow of said coolant is directed on a surface area of that cold inner side through a plurality of holes for both impingement cooling and flow control.

Furthermore the invention relates to a heat shield element, comprising a wall with an inner side and an outer side, having an impingement region adjacent to the inner side, said inner side having surface area which can be impinged by a coolant flow introduced through a plurality of impingement holes opposite to said surface area effecting an impingement pressure drop.

Because of the very high temperatures attained in a combustion chamber or in channels through which hot gases flow, it is very important to provide sufficient cooling to the walls by using as little coolant as possible. For this reason an arrangement of heat shield elements is used and nowadays a few cooling methods are applied for cooling the large surfaces of such arrangements.

Regarding the velocity level and direction from which the coolant flow comes into contact with the area to be cooled there is the pure impingement cooling method - the coolant is blown perpendicularly to the area and by a vigorous impact heat is transferred, the pure convection cooling method - the coolant is introduced parallel to the area and moves along it, and a combination of the above methods.

Regarding the further downstream use of the coolant two types of circuitries are in use:

- "Open cooling": Here the coolant discharges into the hot gas (simple design but thermodynamically inefficient)
- "closed cooling": After cooling the air is beneficially used, it is ducted to the burners, participating in combustion.

Two kinds of materials can be utilized for the construction of a heat shield element cooled by the methods that were just discussed. On and hand these are high-temperature resistant ceramics. The disadvantage of ceramic materials is their high brittleness High-temperature Iron-, Chrome-, Nickel- or Cobalt-based metal alloys are the alternative. The thermal conductivity of metals is high, heat extraction is possible and the ductile metal is more forgiving lower impact/crack sensitivity. Their operating temperature is limited, however; they must be cooled sufficiently.

A possible design of the heat shield arrangement used to cool a machine component through which hot gas is passing, especially a combustion chamber of a gas turbine installation, is revealed in WO 98/13645 A1. The arrangement comprises a number of heat shield components with cooling fluid and a hot gas wall to be cooled by that fluid. This heat shield component is composed of two walls - an outer wall which is in contact with the hot gas and a parallel inner wall, so that there is a gap between those two walls. An inlet duct is constructed in such a way, that the cooling fluid is directed towards the inner wall. There it flows through a plurality of apertures, impinges against the outer wall and extends in the direction of this wall. After cooling said wall the fluid flows through an outlet duct running parallel to the inlet duct, leaves the inner room of the heat shield component and is led preferably in the burner of the gas turbine installation.

In EP 1 005 620 B1 a heat shield component is described which is part of a hot gas wall to be cooled. The heat shield arrangement that consists of such heat shield components lines the walls of a hot gas space such as the combustion chamber of a gas turbine. The heat shield component comprises a hollow space; its bottom is exposed to a hot gas, which is attached to a carrier. In the hollow space there is a second hollow body element attached to the same carrier and this element has holes on its bottom. The carrier shows a plurality of inlet channels through which the cooling fluid is fed into the inner space of the hollow body element. The fluid flows through the holes at the bottom of the element, reaches the space between the hollow body element and the heat shield component and impinges the inner side of the bottom of the heat shield component. Then the warmed-up fluid is fed to an outlet channel which opens into the burner of the gas turbine.

Summarized, in all heat shield arrangements, especially those used in the combustion chambers of gas turbines, principally compressed air is branched off from the compressor before entering the combustion chamber and used for cooling the wall of the combustion chamber. The advantage is, that at any time there is sufficient air at high pressure which can be utilized to remove the heat from the combustion chamber wall.

The biggest drawback is, the loss of combustion air and the burner bypass. Moreover by mixing the cool air with the hot gases in the combustion chamber the temperature level decreases. That causes a reduction of the thermodynamic efficiency and the power output of the gas turbine.

One object of the present invention is to introduce a method that reduces the cooling air consumption, especially in the case of open cooling, and thus providing more air for combustion.

Another object of the invention is to provide a heat shield design which utilizes that cooling method.

According to the first object of the invention a flexible method is provided by a heat shield element, comprising a wall with an inner side and an outer side, which can be exposed to a hot fluid, and wherein a coolant is introduced into an impingement region of that heat shield element and an impingement flow of said coolant is directed on a surface area of that inner side through a plurality of impingement holes, causing an impingement pressure drop, wherein a discharge flow is drained through a number of discharge holes through said wall from the inner side to the outer side of the wall, causing a discharge pressure drop in series with the impingement pressure drop. The impingement pressure drop and the discharge pressure drop are tailored such as to provide a locally required mass flow, which guarantees the predetermined varying heat transfer coefficients on the cold side.

This can be done by using the so-called controlled outlet flow scheme of the cooling air, i.e. one can match the holes through which the cooling air is introduced (impingement holes) with the holes through which the air is drained out of the heat shield element (discharge holes). Thus tailoring the in-series flow resistances allows two important things:

- Adjust safely a defined mass flow for effective impingement cooling, i.e. minimize air consumption.
- Prevent effectively any hot gas ingestion into cold structures.

If the static pressure outside the heat shield element after the compressor is $P_0$ and the static pressure in the heat shield element is $P_1$ then the impingement pressure drop is $\Delta P_I = P_o - P_1$. Further, if the static pressure at the side of the hot gases is $P_2$, then the discharge pressure drop $\Delta P_D = P_1 - P_2$. The relation among the different pressures is $P_0 > P_1 > P_3$. The statement that the impingement pressure drop and the discharge pressure drop are in series means that the overall pressure drop $\Delta P$ is:

$$\Delta P = \Delta P_I + \Delta P_D = P_0 - P_2$$

According to the equation above the overall pressure drop depends only on the initial and final pressure values $P_0$ and $P_2$ and doesn't depend on the pressure in the heat shield element is $P_1$. The "free" pressure level $P_1$ allows to adjust a required impingement jet velocity level (h.t.c.). If the impingement pressure drop is increases then the discharge pressure drop is decreases but their summation remains always constant and is equal to difference of the pressure values after the compressor and at the hot gas side.

According to a preferred aspect of the method the matching of the impingement pressure drop and the discharge pressure drop includes adjusting the size and numbers ($N_I, N_D$) both types of holes (hole diameter $D_I$, $D_D$).

The impingement holes are preferably introduced in a symmetrical order and the distance between every two holes in the pattern is $X_I$ for the impingement flow. A hole pattern for the impingement holes can be characterized by taking the ratio between $X_I$ and the diameter of the impingement holes $D_I$.

According to another preferred aspect of the method a partial impingement flow is directed on a first surface area and another partial impingement flow is directed on a second surface area which is separated from the first surface area. This denotes the application of two sub-regions separated by a dividing wall inside the heat shield element. Varying the pattern of the impingement holes and the discharge hole area of both sub-regions provides different heat transfer coefficients on the first and the second surface area. This design is particularly suitable for an environment where the hot side h.t.c.-gradient is high.

One more preferred aspect of the method is that the heat extraction is enhanced also by enlarging the surface area interacting with the coolant. The surface area interacting with the coolant is enlarged by cooling fins and / or stiffening ribs and / or a dimple field positioned along said surface area. Stiffening ribs in turn allow lower wall thicknesses, i.e. higher heat extraction.

The method of the present invention can be used for a combustion chamber, in particular an annular combustion chamber of a gas turbine. Moreover air can be taken from an air compressor as coolant.

According to the second object of the invention a heat shield element eligible for cooling by means of that method is a heat shield element, comprising a wall with an inner side and an outer side, which can be exposed to a hot fluid, and having an impingement region adjacent to said inner side, said inner side having a surface area which can be impinged by a coolant flow introduced through a plurality of impingement holes opposite to said surface area effecting an impingement pressure drop, wherein said heat shield element posses a number of discharge holes on said wall for draining the coolant through said discharge holes from the inner side to the outer side of the wall, effecting a discharge pressure drop in series with the impingement pressure drop, and wherein the impingement holes and the discharge holes are matched to one another in such a way, that a required jet velocity coolant flow is obtained which yields a predetermined heat-transfer coefficient $\alpha_R$ of the wall.

The advantages of the heat shield element are implied also from the advantages of the method described above.

Preferred aspects of the heat shield element are the minimization of air consumption and the prevention of hot gas ingestion:

One aspect is the control of local cooling (h.t.c.) via jet velocity/mass flow and $P_1$ by matching in-series resistances towards $\triangle P_I + \triangle P_D$ (pressure drops) : Taylor $D_I$, $N_I$ with $D_D, N_D$.

Another preferred aspect is, that a heat shield element may be constructed as a double-chamber heat shield element where the impingement region is split in two sub-regions or chambers separated by a dividing wall. Said sub-regions may have different impingement hole patterns in order to provide different heat-transfer coefficients when coolant is introduced into the heat shield element. As mentioned above this construction is favorable when the hot side h.t.c. gradient along the heat shield element is high, i.e. that the thermal load of the wall is different in the two sub-regions. By means of this design air consumption is further reduced.

The single chamber design gives best results for small to medium heat shield sizes preferably ca 180x180mm to 240x240mm; the double-chamber construction for medium size heat shield elements with ca. 240x240mm to 300x300.

Another way to improve the heat transfer in the heat shield element can be done by enlarging the inner surface of the wall. Surface-increasing elements comprise for instance cooling fins stiffening ribs or dimples or combinations of such elements positioned on said inner side of the heat shield element. The surface is enlarged typically in the order of more than 50%, in particular 60% compared to a smooth surface with no surface-increasing elements.

One more preferred aspect is that said heat shield element is made of a metal, in particular of a high temperature resistant metal of high thermal conductivity. As aforementioned the heat shield element can be utilized for cooling a combustion chamber, in particular an annular combustion chamber of a gas turbine. The used coolant can be air taken from an air being taken from the compressor of a gab turbine.

The proposed method and the heat shield element have a number of additional advantages, which will be briefly discussed below:

The main advantage is, that by applying the controlled flow scheme of the invention the consumption of compressor air extracted for cooling purposes can be reduced by a factor of 2 compared to current practices. For example in a typical conventional cooling scheme about 10% air from the compressor is required, whereas with the new cooling scheme of the invention the cooling air consumption can be significantly reduced down to about 5-6% of the total compressor air. Therefore, this directly leads to higher power and efficiency of the gas turbine, because more compressor air can be used for the combustion process.

This large potential suggests to use metal heat shield elements being more ductile and forgiving than for example ceramic heat shield elements. The overall new design is simple and robust and very little changes have to be made to current conventional metal heat shields in operation. This new technology implies a high upgrade potential of the state-of-the-art.

The design procedure can be easily applied to other impingement applications as well, for instance aircraft turbine engines, other types of combustion chambers, etc.

The figures below display:

FIG 1    a gas turbine installation with an annular combustion chamber with an axial cross section thou,

FIG 2    a sectional view of a part of the combustion chamber wall of FIG 1, showing two heat shields,

FIG 3    a view of the double-chamber heat shield element shown in FIG 2,

FIG 4    a partial cross section through the wall of a heat shield close to its single fastening bolt,

FIG 5    a top view of the part of FIG 4 showing different means of further cooling enhancements: Surface enlargement, dimpling, stiffening ribs, reduced wall thicknesses, local impingement jets,

FIG 6    a cross section through a dimpled wall of FIG 5 showing surface enlargement and turbulation.

Identical reference indications have the same meaning in the figures.

In the following an embodiment of a heat shield component in a gas turbine is depicted and explained with the accompanying drawings. The proposed designs principally do not require any seals between the combustion chamber wall 11 and the individual plena of each heat shield element row.

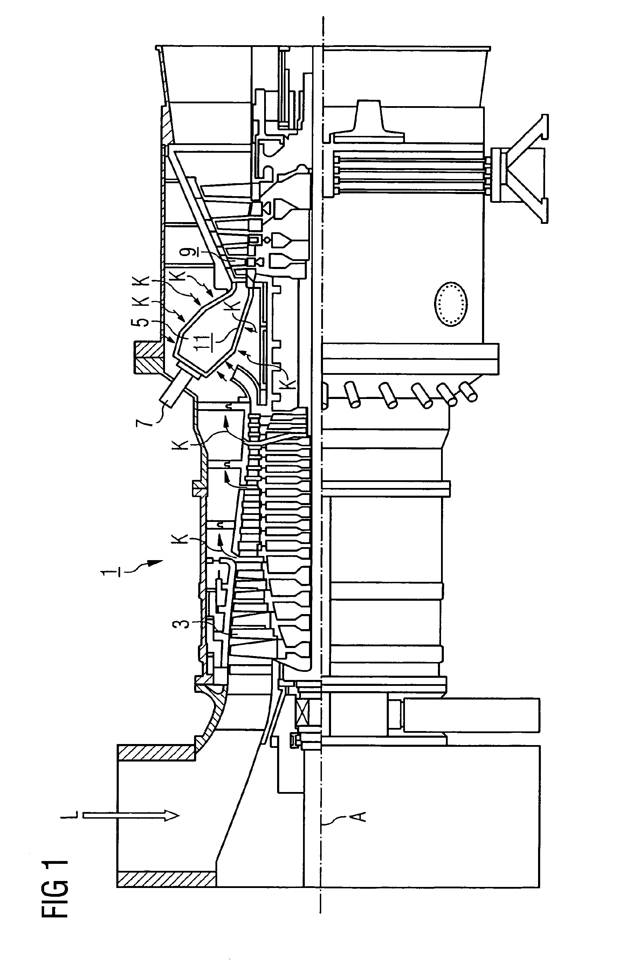

In figure 1a partial cut in the machine direction of a gas turbine installation is presented. The gas turbine installation 1 includes a compressor 3 for combustion air, a combustion chamber 5 with a burner 7 for liquid or gaseous fuel and a turbine 9 to drive the compressor 3 and a generator which is not shown in this figure. All components are lined on a common shaft along the axis A. In the compressor 3 combustion air L is compressed. This compressed air is fed into a number of burners 7, which are arranged on a circle around the annular combustion chamber 5. Fuel, which is not shown in the drawing, is mixed with a large part of the compressed air and after combustion a flow of hot gases is formed which drives the turbine 9. A smaller amount of the compressed air K is used to cool the combustion chamber wall 11.

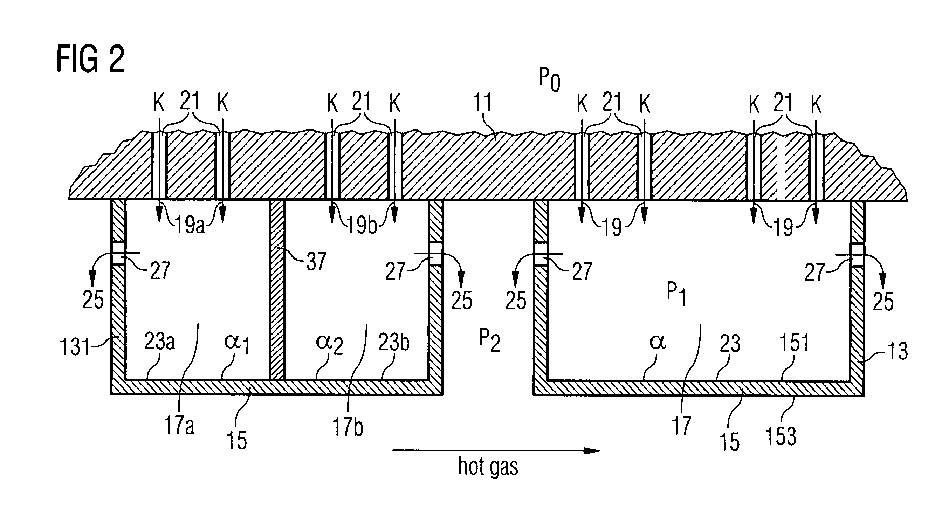

In figure 2 an arrangement of two heat shield elements 15,131 attached to the combustion chamber wall 11 is drawn. The heat shield element 13 is designed as a single chamber heat shield element and the heat shield element 131 is a designed as double-chamber heat shield element and the indications a and b refer respectively to the two chambers of the double-chamber heat shield element 131. Opposite the combustion chamber wall 11 is the heat shield element wall 15 with its inner side 151 and its outer side 153 in contact with the with the hot gases. Attributed to the heat shield elements 15, 131 there is a plurality of impingement holes 21 leading to an impingement region 17 or sub-regions 17a and 17b in the case of the double-chamber design. The impingement holes 21 are formed within the combustion chamber wall 11 in this embodiment. They may alternatively be part of the heat shield element 13, 131 or realized as a suitable impingement device placed in the impingement region 17, 17a, 17b. On the opposite side of the impingement holes 21 there is a surface area 23, 23a, 23b on the inner side 151 of the wall 15 and on the side walls there is also a number of discharge holes 27. The static pressure downstream the compressor 3 is $P_0$, the pressure inside the heat shield element 15 is $P_1$ and outside the heat shield element 15 at the side of the hot gases $P_2$. The cooling air K is led into the impingement holes 21 where it is and enters the impingement region 17 or sub-regions 17a and 17b with a high velocity. There it comes into contact with the surface area 23, 23a or 23b and transports the heat from the wall 15. Then the flow, now discharge flow 25 leaves the heat shield elements 13, 131 through the discharge holes 27 and flows straight to the hot gases at the outer side 153 of the wall 15. Passing through the impingement holes 21 the pressure of the coolant K decreases due to the throttle effect of the narrow impingement holes 21 and the pressure drop there is $\Delta P_I$. Likewise, the discharge holes 27 result once again in a pressure drop $\triangle P_D$ which is in series with the pressure drop $\Delta P_I$. The adjustment of the pressure drops $\triangle P_I$ and $\triangle P_D$ characterizes the jet velocities 19, 19a and 19b. In their turn they define the heat transfer coefficients $\alpha$, $\alpha_1$ and $\alpha_2$ on the different surface areas 23, 23a and 23b.

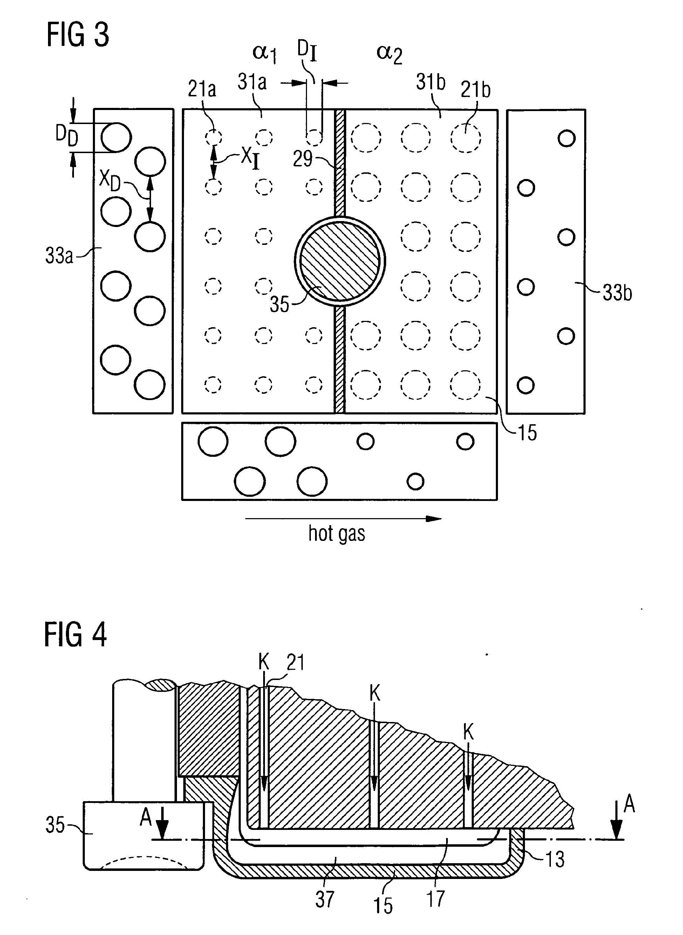

Figure 3 reveals a view of the double-chamber heat shield element 131 shown in Figure 2. The heat shield element wall 15 is displayed with the projection of the impingement holes 21a and 21b on it and the dividing wall 29. On the side walls of the double-chamber heat shield element 131 the discharge holes 33a and 33b are depicted. The impingement holes form patterns 31, 31a and 31b characterized by a diameter $D_I$ and distance between one another $X_I$. The originated heat transfer coefficients in both parts of the double-chamber heat shield element 131 are $\alpha_1$ and $\alpha_2$. The heat shield element 131 can be firmly attached to the combustion chamber wall 11 via a single central bolt.

In figure 4 a partial cross section through a singe-chamber heat shield element 13 is presented comprising also the fastening bolt 35. A stiffening rib 37 is positioned along the wall 15. The coolant flow K enters the impingement holes 21 and reaches the impingement region 17 as an impingement flow 19, it is directed along the stiffening rib 37 and leaves the inside of the heat shield element 13 through discharge holes which are not depicted in this drawing.

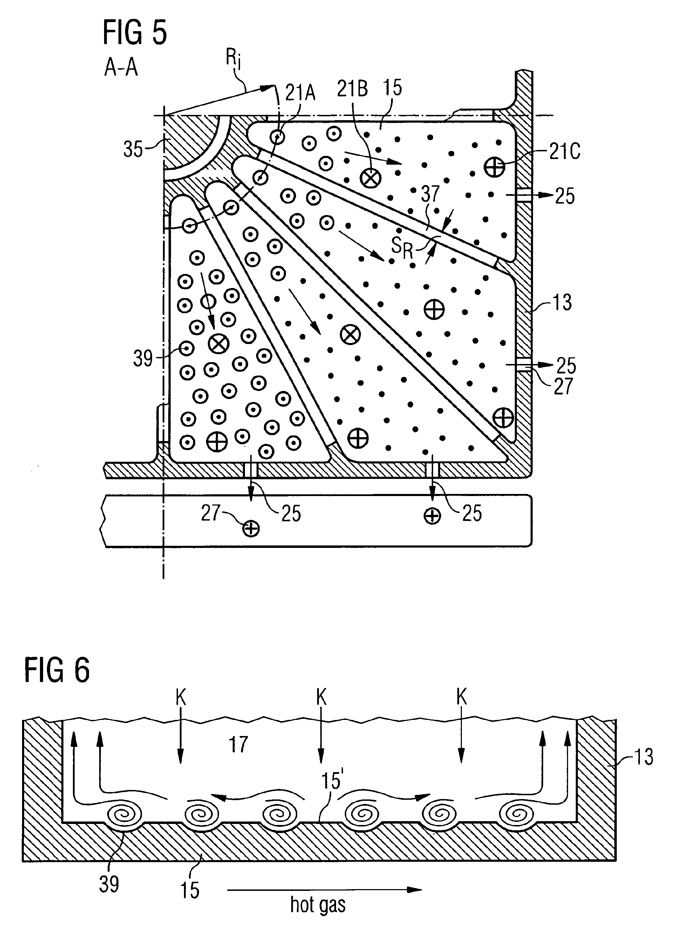

Figure 5 discloses they top view A-A of a quarter of the heat shield element 13 in figure 4 showing different possibilities for cooling enhancements. Impingement holes 21A, 21B, 21C of three sizes are projected on the wall 15. With regard to the center defined by the fastening bolt 35 a first group of impingement holes 21A is located on a determined inner radius Ri. A second group of impingement holes 21B is located on a determined position outside the inner radius Ri. A third group of impingement holes 21C is located close to the side walls of the heat shield element 13 at a distance from the impingement holes 21A, 21B. The discharge flows 25 through the discharge holes 27 are also revealed in this figure. Two possible means for cooling improvement are displayed - stiffening ribs 37 (to enable thin walls) stretching from the inner side wall around the bolt 35 and the outer side walls of the heat shield element 13 and a plurality of dimples 39 located on the wall 15. The impingement flow entering perpendicularly to the wall 15 cools said wall 15, flows around and over the surface-increasing elements in the direction of the discharge holes 27 where it leaves the heat shield element 13. The meaning of surface-increasing elements positioned on the wall 15 is, that the surface of said wall 15 is increased in the order of more than 50% and thus the heat transferred between the wall 15 and the coolant is raised.

The effect of the dimples 39 positioned on the inner side 151 of the wall 15 of a heat shield element 13 is shown in a cross-sectional view along the cross section in figure 6. The drawing shows the wall 15 of a heat shield element 13 with a number of dimples 39 formed to the inner side 151 of the wall 15. The coolant flow K entering the region 17 impinges against the inner side 151 and thus carries away the heat of the wall 15. Due to the dimples 39 placed on that inner side 151 local vortices 41 occur which enhance the turbulent character of the flow and consequently the heat transfer from the wall 15. The dimples are preferably spherical indentations in the wall 15 with a predetermined radius and depth.

## Claims

1. A method for cooling a heat shield element (13), comprising a wall (15) with an inner side (151) and an outer side (153), which can be exposed to a hot fluid, and wherein a coolant (K) is introduced into an impingement region (17) of that heat shield element (13) and an impingement flow (19) of said coolant (K) is directed on a surface area (23) of that inner side (151) through a plurality of impingement holes (21), causing an impingement pressure drop ($\Delta P_I$), **characterised in that** an overall flow (25) is drained through a number of discharge holes (27) through said wall (15) from the inner side (151) to the outer side (153) of the wall (15), causing a discharge pressure drop ($\Delta P_D$) in series with the impingement pressure drop ($\Delta P_I$), the impingement pressure drop ($\Delta P_I$) and the discharge pressure drop ($\Delta P_D$) are matched to one another so that a required coolant flow (K) is generated which yields a predetermined heat-transfer coefficient ($\alpha$) of the wall (15).

2. A method according to claim 1, **characterised in that** matching the impingement pressure drop ($\Delta P_I$) and the discharge pressure drop ($\triangle P_D$) to one another includes adjusting the cross sections ($D_I$, $D_D$) of both types of holes (21, 27) and / or their number ($N_I$, $N_D$) and / or their location.

3. A method according to any of the preceding claims, **characterised in tha**t a first impingement flow (19a) is directed on a first surface area (23a) and a second impingement flow (19b) is directed on a second surface area (23b) which is separated from the first surface area.

4. A method according to claim 3, **characterised in tha**t the first and second impingement flows (19a, 19b) are adjusted to the local needs in order to provide different heat-transfer coefficients ($\alpha_1$, $\alpha_2$) on the first and second surface areas (23a, 23b).

5. A method according to claim 3 or 4, **characterised in that** in order to obtain a different heat-transfer coefficient ($\alpha_1$) on the first surface area (23a) compared to the second surface area (23b) the first impingement pattern is differing from the second impingement pattern.

6. A method according to any of the preceding claims, **characterised in that** the heat transfer rate is enhanced by enlarging the surface area (23, 23a, 23b) interacting with the coolant (K).

7. A method according to claim 6, **characterised in that** the heat transfer rate is enhanced by reducing the thickness of the wall (15).

8. A method to claim 6 or 7, **characterised in that** the heat transfer rate is enhanced by using locally different impingement hole patterns (31a,31b).

9. A method according to claim 6, 7 or 8, **characterised in that** the surface area (23, 23a, 23b) is enlarged by cooling fins and / or stiffening ribs (37) and / or a dimple field (39) positioned along said surface area (23, 23a, 23b).

10. A method according to any of the preceding claims, **characterised in that** said method is used for the cooling of a combustion chamber (5), in particular an annular combustion chamber of a gas turbine (9).

11. A method according to any of the preceding claims, **characterised in that** said coolant (K) is air taken from an air compressor (3).

12. A heat shield element (13), comprising a wall (15) with an inner side (151) and an outer side (153), which can be exposed to a hot fluid, and having an impingement region (17) adjacent to said inner side (151), said inner side (151) having a surface area (23) which can be impinged by a coolant flow (K) introduced through a plurality of impingement holes (21) opposite to said surface area (23) effecting an impingement pressure drop ($\Delta P_I$), **characterised in that** said heat shield element (13) posses a number of discharge holes (27) on said wall (15) for draining the coolant (K) through said discharge holes (27) from the inner side (151) to the outer side (153) of the wall (15), effecting a discharge pressure drop ($\Delta P_D$) in series with the impingement pressure drop ($\Delta P_I$), the impingement holes (21) and the discharge holes (27) are matched to one another in such a way, that a required coolant flow (K) is obtained which yields a predetermined heat-transfer coefficient ($\alpha$) of the wall (15).

13. A heat shield element (13) according to claim 12, **characterised in that** the matching parameters of the impingement holes (21) and the discharge holes (27) include adjusting the cross-section ($D_I$, $D_D$) of both types holes (21, 27) of the impingement openings (21), in particular the cross-section and the discharge openings (27), and / or their number ($N_I$, $N_D$) and / or their location.

14. A heat shield element (13) according to claim 13, **characterised in that** an impingement hole pattern (31) is formed by a combination of impingement holes (21).

15. A heat shield element (13) according to claim 13 or 14, **characterised in that** a discharge opening.

16. A heat shield element (13) according to any of the preceding claims 12 to 15, **characterised in that** the heat shield element (13) is constructed as a double-chamber heat shield element (131) where the impingement region (17) is split in two sub-regions (17a, 17b) separated by a dividing wall (29).

17. A heat shield element (13) according to claim 16, **characterised in that** the diving wall can be attached to a carrier (11).

18. A heat shield element (13) according to claim 16, **characterised in that** said sub-regions (17a, 17b) have different impingement hole patterns (31a, 31b) in order to provide different heat-transfer coefficients ($\alpha_1$, $\alpha_2$), when coolant (K) is introduced.

19. A heat shield element (13) according to claim 17, **characterised in that** said impingement holes (21) of the first sub-region (17a) have bigger cross section than that of the second sub-region (17b) so that the heat-transfer coefficient ($\alpha_1$) in the first sub-region (17a) is lower than that ($\alpha_1$) in the second sub-region (17b).

20. A heat shield element (13) according to any of the preceding claims 12 to 19,
**characterised in that** the inner surface (151) of the wall (15) is enlarged by surface-increasing elements in order to obtain a higher heat-transfer coefficient resulting is a higher level of heat transferred.

21. A heat shield element (13) according to claim 20, **characterised in that** surface-increasing elements comprise cooling fins stiffening ribs (37) or dimples (39) or combinations of such elements positioned on said inner side (151).

22. A heat shield element (13) according to any of the preceding claims 12 to 21, **characterised in that** said heat shield element (13) is a metal heat shield element, in particular of a high temperature resistant metal.

23. A heat shield element (13) according to claim 22, **characterised in that** the metal has a high thermal conductivity.

24. Combustion chamber (5) comprising a heat shield element (13) according to any of the preceding claims 12 to 22.

25. Gas turbine (9) comprising a combustion chamber (5) according to claim 24.

26. Gas turbine (9) according to claim 25, comprising a compressor (3) providing cooling air (K) for cooling the heat shield element (13).

FIG 1

# FIG 2

EP 1 650 503 A1

FIG 3

$\alpha_1$ $\quad$ $D_I$ $\quad$ $\alpha_2$

21a $\quad$ 31a $\quad$ 31b $\quad$ 21b

$D_D$

$X_D$

$X_I$

29

33a

35

33b

15

hot gas

FIG 4

K $\quad$ 21 $\quad$ K $\quad$ K

35 $\quad$ A $\quad$ A

37 $\quad$ 15 $\quad$ 17 $\quad$ 13

FIG 5
A-A

FIG 6

hot gas

European Patent
Office

**PARTIAL EUROPEAN SEARCH REPORT**

which under Rule 45 of the European Patent Convention
shall be considered, for the purposes of subsequent
proceedings, as the European search report

Application Number

EP 04 02 5338

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 104 871 A (ALSTOM POWER UK LTD) 6 June 2001 (2001-06-06) | 1,2, 10-14, 22,24-26 | F23R3/00 |
| Y | * paragraph [0005] * | 3-9, 16-21,23 | |
| | * paragraph [0009] * * paragraph [0015]; figures 2-5 * ----- | | |
| Y | US 5 396 759 A (RICHARDSON ET AL) 14 March 1995 (1995-03-14) * figures 3-7 * * column 3, line 26 - column 4, line 22 * * column 4, line 64 - column 5, line 3 * * column 5, line 17 - line 24 * ----- | 3-6,8,9, 16-21 | |
| Y | US 4 315 406 A (BHANGU ET AL) 16 February 1982 (1982-02-16) | 23 | |
| A | * figures 12,19 * * column 1, line 65 - column 2, line 10 * * column 3, line 37 - line 40 * ----- | 1,5,7,8, 13,18 | |

| | | | TECHNICAL FIELDS SEARCHED (Int.Cl.7) |
|---|---|---|---|
| | -/-- | | F23R |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 23 March 2005 | Mougey, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C07)

**European Patent Office**

**PARTIAL EUROPEAN SEARCH REPORT**

Application Number

EP 04 02 5338

## DOCUMENTS CONSIDERED TO BE RELEVANT

| Category | Citation of document with indication, where appropriate, of relevant passages | Relevant to claim |
|---|---|---|
| Y | EP 1 318 353 A (UNITED TECHNOLOGIES CORPORATION) 11 June 2003 (2003-06-11) | 7 |
| A | | 1,6,8,9, 13,21 |
| | ----- | |
| X | US 5 782 294 A (FROEMMING ET AL) 21 July 1998 (1998-07-21) | 1-3, 10-13, 16,17, 24-26 |
| | * column 2, line 56 - column 3, line 6; figures 1,2 * * column 4, line 52 - column 5, line 10 * | |
| | ----- | |
| A | EP 1 363 078 A (UNITED TECHNOLOGIES CORPORATION) 19 November 2003 (2003-11-19) | 1,3-5, 16-18, 22,23 |
| | * paragraph [0013] - paragraph [0014] * * paragraph [0017] - paragraph [0018] * * paragraph [0026]; figures 2,3 * | |
| | ----- | |
| A | US 5 758 504 A (ABREU ET AL) 2 June 1998 (1998-06-02) * the whole document * | 1,13 |
| | ----- | |
| A | EP 0 203 431 A (GENERAL ELECTRIC COMPANY) 3 December 1986 (1986-12-03) * the whole document * | 1,13 |
| | ----- | |

CLASSIFICATION OF THE APPLICATION (Int.Cl.7)

TECHNICAL FIELDS SEARCHED (Int.Cl.7)

EPO FORM 1503 03.82 (P04C10)

**European Patent Office**

**INCOMPLETE SEARCH SHEET C**

Application Number

EP 04 02 5338

```
Claim(s) searched completely:
      1-14,16-26

Claim(s) not searched:
      15

Reason for the limitation of the search:

Due to the incomplete wording of claim 15, it has not been possible to
determine its subject-matter.
```

## ANNEX TO THE EUROPEAN SEARCH REPORT
## ON EUROPEAN PATENT APPLICATION NO.

EP 04 02 5338

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2005

| Patent document cited in search report | | Publication date | Patent family member(s) | | Publication date |
|---|---|---|---|---|---|
| EP 1104871 | A | 06-06-2001 | GB | 2356924 A | 06-06-2001 |
| | | | DE | 60012289 D1 | 26-08-2004 |
| | | | EP | 1104871 A1 | 06-06-2001 |
| | | | JP | 2001227359 A | 24-08-2001 |
| | | | US | 2001004835 A1 | 28-06-2001 |
| US 5396759 | A | 14-03-1995 | DE | 69101682 D1 | 19-05-1994 |
| | | | DE | 69101682 T2 | 28-07-1994 |
| | | | EP | 0471438 A1 | 19-02-1992 |
| | | | JP | 4227418 A | 17-08-1992 |
| US 4315406 | A | 16-02-1982 | GB | 2049152 A | 17-12-1980 |
| | | | DE | 3015624 A1 | 27-11-1980 |
| | | | FR | 2455678 A1 | 28-11-1980 |
| | | | JP | 1485773 C | 14-03-1989 |
| | | | JP | 55148151 A | 18-11-1980 |
| | | | JP | 63023452 B | 17-05-1988 |
| EP 1318353 | A | 11-06-2003 | US | 2003101731 A1 | 05-06-2003 |
| | | | EP | 1318353 A2 | 11-06-2003 |
| | | | JP | 2003185139 A | 03-07-2003 |
| US 5782294 | A | 21-07-1998 | NONE | | |
| EP 1363078 | A | 19-11-2003 | US | 2003213249 A1 | 20-11-2003 |
| | | | EP | 1363078 A2 | 19-11-2003 |
| | | | JP | 2003329242 A | 19-11-2003 |
| US 5758504 | A | 02-06-1998 | CA | 2208798 A1 | 05-02-1998 |
| | | | DE | 19733868 A1 | 12-02-1998 |
| | | | JP | 10068523 A | 10-03-1998 |
| EP 0203431 | A | 03-12-1986 | AU | 593551 B2 | 15-02-1990 |
| | | | AU | 5735386 A | 20-11-1986 |
| | | | CA | 1263243 A1 | 28-11-1989 |
| | | | DE | 3675690 D1 | 03-01-1991 |
| | | | EP | 0203431 A1 | 03-12-1986 |
| | | | JP | 1819072 C | 27-01-1994 |
| | | | JP | 5024337 B | 07-04-1993 |
| | | | JP | 62009157 A | 17-01-1987 |
| | | | NO | 861900 A ,B, | 17-11-1986 |
| | | | US | 4719748 A | 19-01-1988 |

EPO FORM P0459

For more details about this annex : see Official Journal of the European Patent Office, No. 12/82